# EUROPEAN PATENT APPLICATION

(11) **EP 4 475 595 A1**
(43) Date of publication of application: **11.12.2024**
(21) Application number: 23759327.2
(22) Date of filing: 27.02.2023
(51) Int. Cl.: H04W 36/00

(54) **COMMUNICATION METHOD AND APPARATUS**

(30) Priority: 28.02.2022 CN 202210188271
(71) Applicant: Huawei Technologies Co., Ltd., Shenzhen, Guangdong 518129 (CN)
(72) Inventor: LOU, Chong, Shenzhen, Guangdong 518129 (CN); XU, Xiaoying, Shenzhen, Guangdong 518129 (CN); GU, Zhifang, Shenzhen, Guangdong 518129 (CN); FAN, Qiang, Shenzhen, Guangdong 518129 (CN)
(74) Representative: Pfenning, Meinig & Partner mbB
(86) International application number: PCT/CN2023/078476
(87) International publication number: WO 2023/160706

(57) **Abstract**

This application relates to the field of communication technologies, and discloses a communication method and apparatus. The method includes: A terminal device receives, in a first cell, configuration information of at least one candidate cell from an access network device; and selects a second cell when a radio link of the first cell meets a first condition (that is, a problem occurs on the radio link of the first cell). If the second cell belongs to the at least one candidate cell, the terminal device is handed over from the first cell to the second cell, and communicates with the access network device in the second cell based on configuration information of the second cell. In this way, after the problem occurs on the radio link of the first cell, the terminal device can be handed over to the second cell, and communicate with the access network device based on the configuration information that is of the second cell and that is received in the first cell. This can effectively save transmission resources, and quickly recover the radio link. Alternatively, if the second cell does not belong to the at least one candidate cell, the terminal device performs RRC reestablishment to access the second cell to recover the radio link.

## Description

### CROSS-REFERENCE TO RELATED APPLICATIONS

This application claims priority to Chinese Patent Application No. 202210188271.9, filed with the China National Intellectual Property Administration on February 28, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

With continuous development of science and technologies, new internet services such as autonomous driving and virtual reality are constantly emerging. This also poses an increasingly high requirement on a wireless communication technology.

In a wireless communication system, radio link quality directly determines a data transmission capability. Therefore, after a terminal device detects that a problem occurs on a radio link, how to recover the radio link still needs to be further studied.

### SUMMARY

This application provides a communication method and apparatus, to quickly recover a radio link after a terminal device detects that a problem occurs on the radio link.

According to a first aspect, an embodiment of this application provides a communication method. The method may be applied to a terminal device or a module in a terminal device. For example, the method is applied to the terminal device. In the method, the terminal device receives, in a first cell, configuration information of at least one candidate cell from an access network device; and selects a second cell when a radio link of the first cell meets a first condition (that is, a problem occurs on the radio link of the first cell); and if the second cell belongs to the at least one candidate cell, the terminal device is handed over from the first cell to the second cell, and communicates with the access network device in the second cell based on configuration information that is of the second cell and that is received in the first cell; or if the second cell does not belong to the at least one candidate cell, the terminal device performs RRC reestablishment to access the second cell.

According to the foregoing method, after the terminal device detects that a problem occurs on a radio link of a current serving cell, the terminal device may not release the configuration information of the at least one candidate cell. Therefore, after the terminal device selects one of the candidate cells as a new serving cell, the terminal device can communicate with the access network device based on configuration information of the new serving cell, and the access network device does not need to resend the configuration information of the new serving cell to the terminal device. This can effectively save transmission resources, and quickly recover the radio link.

In a possible design, that radio link quality of the first cell meets the first condition includes at least one of the following: The radio link quality of the first cell is less than a first threshold; the radio link quality of the first cell is always less than the first threshold in a first time window; a quantity of out-of-synchronization indications consecutively detected by the terminal device is greater than or equal to a second threshold; after the quantity of out-of-synchronization indications consecutively detected by the terminal device is greater than or equal to the second threshold, the terminal device starts a timer, and detects no in-synchronization indication in a timing window of the timer; and a radio link failure RLF occurs in the first cell.

In a possible design, the method further includes: receiving, in the first cell, first information from the access network device, where the first information is used to configure the first condition.

In a possible design, radio link quality of the second cell meets a second condition; and that radio link quality of the second cell meets a second condition includes at least one of the following: The radio link quality of the second cell is greater than or equal to a third threshold; the radio link quality of the second cell is always greater than or equal to the third threshold in a second time window; the radio link quality of the second cell is greater than or equal to radio link quality of a candidate cell other than the second cell in the at least one candidate cell; the radio link quality of the second cell is always greater than or equal to the radio link quality of the candidate cell other than the second cell in the at least one candidate cell in the second time window; the radio link quality of the second cell is greater than the radio link quality of the first cell; the radio link quality of the second cell is always greater than the radio link quality of the first cell in the second time window; the radio link quality of the second cell is greater than a sum of the radio link quality of the first cell and an offset; and the radio link quality of the second cell is always greater than the sum of the radio link quality of the first cell and the offset in the second time window.

In a possible design, the method further includes: receiving, in the first cell, second information from the access network device, where the second information is used to configure the second condition.

In a possible design, the method further includes: sending third information to the access network device in the second cell, where the third information indicates that the terminal device has been handed over from the first cell to the second cell, and the handover is a cell handover triggered by the terminal device.

In a possible design, the third information includes at least one of the following: an identifier of the terminal device; an identifier of the first cell; downlink beam information used by the access network device to send downlink data to the terminal device in the second cell; and indication information, where the indication information indicates the cell handover triggered by the terminal device.

In a possible design, the third information is carried in a message in a random access procedure initiated by the terminal device in the second cell.

In a possible design, the method further includes: sending fourth information to the access network device in the second cell, where the fourth information is carried on a first resource, and the first resource is a resource corresponding to a cell handover triggered by the terminal device.

In a possible design, the method further includes: receiving, in the first cell, enabling information from the access network device, where the enabling information is used to enable the terminal device to trigger the cell handover after a problem occurs on a radio link of a serving cell of the terminal device.

In this way, the access network device can control, based on the enabling information, whether the terminal device triggers the cell handover after the problem occurs on the radio link of the serving cell of the terminal device. This helps the access network device to flexibly control behavior of the terminal device.

In a possible design, the at least one candidate cell includes: a candidate cell corresponding to a layer 1/layer 2 handover, and/or a candidate cell corresponding to a layer 3 handover.

According to a second aspect, an embodiment of this application provides a communication method. The method may be applied to a second DU or a module in a second DU. For example, the method is applied to the second DU. In the method, the second DU determines that a terminal device has been handed over from a first cell to a second cell, and the handover is a cell handover triggered by the terminal device. When the first cell and the second cell belong to different DUs, first indication information is sent to a CU, where the first indication information indicates that the terminal device has been handed over from the first cell to the second cell, so that the CU learns that the terminal device has been handed over from the first cell to the second cell. Alternatively, when both the first cell and the second cell belong to the second DU, the first indication information and fourth indication information are sent to the CU, where the fourth indication information indicates a data packet that is not successfully sent by the second DU to the terminal device, so that after the terminal device performs the handover, the CU can send the data packet to the terminal device based on the data packet that is not successfully sent by the second DU to the terminal device, to avoid a data packet loss or retransmission.

In a possible design, the determining that a terminal device has been handed over from a first cell to a second cell includes: receiving third information from the terminal device, where the third information indicates that the terminal device has been handed over from the first cell to the second cell; or receiving fourth information from the terminal device, where the fourth information is carried on a first resource, and the first resource is a resource corresponding to the cell handover triggered by the terminal device.

In a possible design, the first indication information includes data amount information already cached by the second DU; or the method further includes: sending the data amount information already cached by the second DU to the CU.

In this way, the data amount information already cached by the second DU is sent to the CU. This helps the CU to control traffic of downlink data sent to the terminal device via the second DU.

In a possible design, third indication information includes at least one of the following: a sequence number of a PDCP PDU that is not successfully sent; and a highest sequence number of a PDCP PDU that is successfully sent.

In a possible design, the third indication information is carried in a user plane data frame or a control plane message.

According to a third aspect, an embodiment of this application provides a communication method. The method may be applied to a CU or a module in a CU. For example, the method is applied to the CU. In the method, the CU sends second indication information to a first DU, where the second indication information indicates that a terminal device has been handed over from a first cell to a second cell, the handover is a cell handover triggered by the terminal device, the first cell belongs to the first DU, and the second cell belongs to a second DU; receives third indication information from the first DU, where the third indication information indicates a data packet that is not successfully sent by the first DU to the terminal device; and sends the data packet to the terminal device based on the third indication information via the second DU.

In this way, because the CU can receive the third indication information, after the terminal device performs the handover, the CU can send the data packet to the terminal device based on the data packet that is not successfully sent by the first DU to the terminal device, to avoid a data packet loss or retransmission.

In a possible design, the method further includes: receiving first indication information from the second DU, where the first indication information indicates that the terminal device has been handed over from the first cell to the second cell.

In a possible design, the third indication information includes at least one of the following: a sequence number of a PDCP PDU that is not successfully sent; and a highest sequence number of a PDCP PDU that is successfully sent.

According to a fourth aspect, an embodiment of this application provides a communication method. The method may be applied to a first DU or a module in a first DU. For example, the method is applied to the first DU. In the method, the first DU receives second indication information from a CU, where the second indication information indicates that a terminal device has been handed over from a first cell to a second cell, the handover is a cell handover triggered by the terminal device, the first cell belongs to the first DU, and the second cell belongs to a second DU; and sends third indication information to the CU based on the second indication information, where the third indication information indicates a data packet that is not successfully sent by the first DU to the terminal device.

In this way, because the first DU can send the third indication information to the CU, after the terminal device performs the handover, the CU can send the data packet to the terminal device based on the data packet that is not successfully sent by the first DU to the terminal device, to avoid a data packet loss or retransmission.

In a possible design, third indication information includes at least one of the following: a sequence number of a PDCP PDU that is not successfully sent; and a highest sequence number of a PDCP PDU that is successfully sent.

According to a fifth aspect, an embodiment of this application provides a communication method. The method may be applied to a first DU or a module in a first DU. For example, the method is applied to the first DU. In the method, the first DU sends a handover instruction to a terminal device, where the handover instruction instructs to hand over the terminal device from a first cell to a second cell, the first cell belongs to the first DU, and the second cell belongs to a second DU; and sends third indication information to a CU, where the third indication information indicates a data packet that is not successfully sent by the first DU to the terminal device.

In a possible design, the handover instruction includes downlink beam information used by the second DU to send downlink data to the terminal device.

According to a sixth aspect, an embodiment of this application provides a communication method. The method may be applied to a CU or a module in a CU. For example, the method is applied to the CU. In the method, the CU receives notification information and third indication information from a first DU, where the notification information is used to notify the CU that a terminal device has been handed over from a first cell to a second cell, the third indication information indicates a data packet that is not successfully sent by the first DU to the terminal device, the first cell belongs to the first DU, and the second cell belongs to a second DU; and sends the data packet to the terminal device via the second DU.

In a possible design, the method further includes: receiving data amount information already cached by the second DU.

According to a seventh aspect, an embodiment of this application provides a communication method. The method may be applied to a second DU or a module in a second DU. For example, the method is applied to the second DU. In the method, the second DU receives handover complete information from a terminal device, where the handover complete information indicates that the terminal device has been handed over from a first cell to a second cell, the first cell belongs to a first DU, and the second cell belongs to the second DU; and sends, to a CU based on the handover complete information, data amount information already cached by the second DU.

In a possible design, the handover complete information includes downlink beam information used by the second DU to send downlink data to the terminal device.

According to an eighth aspect, this application provides a communication apparatus. The communication apparatus is, for example, a terminal device. The communication apparatus has a function of implementing the first aspect. For example, the communication apparatus includes a corresponding module, unit, or means (means) for performing the operation in the first aspect. The module, unit, or means may be implemented by using software, or may be implemented by using hardware, or may be implemented by using hardware executing corresponding software.

In a possible design, the communication apparatus includes a processing unit and a communication unit. The communication unit may be configured to receive/send a signal, to implement communication between the communication apparatus and another apparatus. The processing unit may be configured to perform some internal operations of the communication apparatus. Functions performed by the processing unit and the communication unit may correspond to the operations in the first aspect.

In a possible design, the communication apparatus includes a processor, and the processor may be coupled to a memory. The memory may store a computer program or instructions necessary for implementing the functions in the first aspect. The processor may execute the computer program or instruction stored in the memory. When the computer program or instruction is executed, the communication apparatus is enabled to implement the method according to any one of the possible designs or implementations of the first aspect.

In a possible design, the communication apparatus includes a processor and a memory. The memory may store a computer program or instructions necessary for implementing the functions in the first aspect. The processor may execute the computer program or instruction stored in the memory. When the computer program or instruction is executed, the communication apparatus is enabled to implement the method according to any one of the possible designs or implementations of the first aspect.

In a possible design, the communication apparatus includes a processor and an interface circuit, and the processor is configured to: communicate with another apparatus through the interface circuit, and perform the method according to any one of the possible designs or implementations of the first aspect.

According to a ninth aspect, this application provides a communication apparatus. The communication apparatus is, for example, an access network device, and the access network device may include a CU and one or more DUs. The communication apparatus has a function for implementing any one of the second aspect to the seventh aspect. For example, the communication apparatus includes a corresponding module, unit, or means for performing the operation in any one of the second aspect to the seventh aspect. The function, unit, or means may be implemented by using software, or may be implemented by using hardware, or may be implemented by using hardware executing corresponding software.

In a possible design, the communication apparatus includes a processing unit and a communication unit. The communication unit may be configured to receive/send a signal, to implement communication between the communication apparatus and another apparatus. For example, the communication unit is configured to send system information to a terminal device. The processing unit may be configured to perform some internal operations of the communication apparatus. Functions performed by the processing unit and the communication unit may correspond to the operations in any one of the second aspect to the seventh aspect.

In a possible design, the communication apparatus includes a processor, and the processor may be coupled to a memory. The memory may store a computer program or instructions necessary for implementing the functions in any one of the second aspect to the seventh aspect. The processor may execute the computer program or instruction stored in the memory. When the computer program or instruction is executed, the communication apparatus is enabled to implement the method according to any one of the possible designs or implementations of the second aspect to the seventh aspect.

In a possible design, the communication apparatus includes a processor and a memory, and the memory may store a computer program or instructions necessary for implementing the functions in any one of the second aspect to the seventh aspect. The processor may execute the computer program or instruction stored in the memory. When the computer program or instruction is executed, the communication apparatus is enabled to implement the method according to any one of the possible designs or implementations of the second aspect to the seventh aspect.

In a possible design, the communication apparatus includes a processor and an interface circuit, and the processor is configured to: communicate with another apparatus through the interface circuit, and perform the method according to any one of the possible designs or implementations of the second aspect to the seventh aspect.

It may be understood that in the eighth aspect and the ninth aspect, the processor may be implemented by hardware or software. When the processor is implemented by hardware, the processor may be a logic circuit, an integrated circuit, or the like. When the processor is implemented by the software, the processor may be a general-purpose processor, and is implemented by reading software code stored in the memory. In addition, there may be one or more processors, and one or more memories. The memory may be integrated with the processor, or the memory and the processor are separately disposed. In a specific implementation process, the memory and the processor may be integrated on a same chip, or may be separately disposed on different chips. A type of the memory and a manner of disposing the memory and the processor are not limited in embodiments of this application.

According to a tenth aspect, this application provides a communication system. The communication system may include the communication apparatus according to the eighth aspect, and may further include the communication apparatus according to the ninth aspect.

According to an eleventh aspect, this application provides a computer-readable storage medium. The computer storage medium stores computer-readable instructions, and when a computer reads and executes the computer-readable instructions, the computer is enabled to perform the method according to any one of the possible designs of the first aspect to the seventh aspect.

According to a twelfth aspect, this application provides a computer program product. When a computer reads and executes the computer program product, the computer is enabled to perform the method according to any one of the possible designs of the first aspect to the seventh aspect.

According to a thirteenth aspect, this application provides a chip. The chip includes a processor, and the processor is coupled to a memory, and is configured to read and execute a software program stored in the memory, to implement the method according to any one of the possible designs of the first aspect to the seventh aspect.

These aspects or another aspect of this application is clearer and more comprehensible in descriptions of the following embodiments.

### BRIEF DESCRIPTION OF DRAWINGS

FIG. 1 is a diagram of a communication system to which an embodiment of this application is applicable;
FIG. 2A is a diagram of a CU-DU split architecture according to an embodiment of this application;
FIG. 2B is a diagram of another CU-DU split architecture according to an embodiment of this application;
FIG. 3 is a schematic flowchart corresponding to a communication method according to an embodiment of this application;
FIG. 4 is a schematic flowchart corresponding to a communication method according to an embodiment of this application;
FIG. 5 is a schematic flowchart corresponding to a communication method according to an embodiment of this application;
FIG. 6 is a schematic flowchart corresponding to a communication method according to an embodiment of this application;
FIG. 7 is a schematic flowchart corresponding to a communication method according to an embodiment of this application;
FIG. 8 is a block diagram of a possible example of an apparatus according to an embodiment of this application;
FIG. 9 is a diagram of a structure of an access network device according to an embodiment of this application; and
FIG. 10 is a diagram of a structure of a terminal device according to an embodiment of this application.

### DESCRIPTION OF EMBODIMENTS

The following describes technical solutions in embodiments of this application with reference to the accompanying drawings in embodiments of this application.

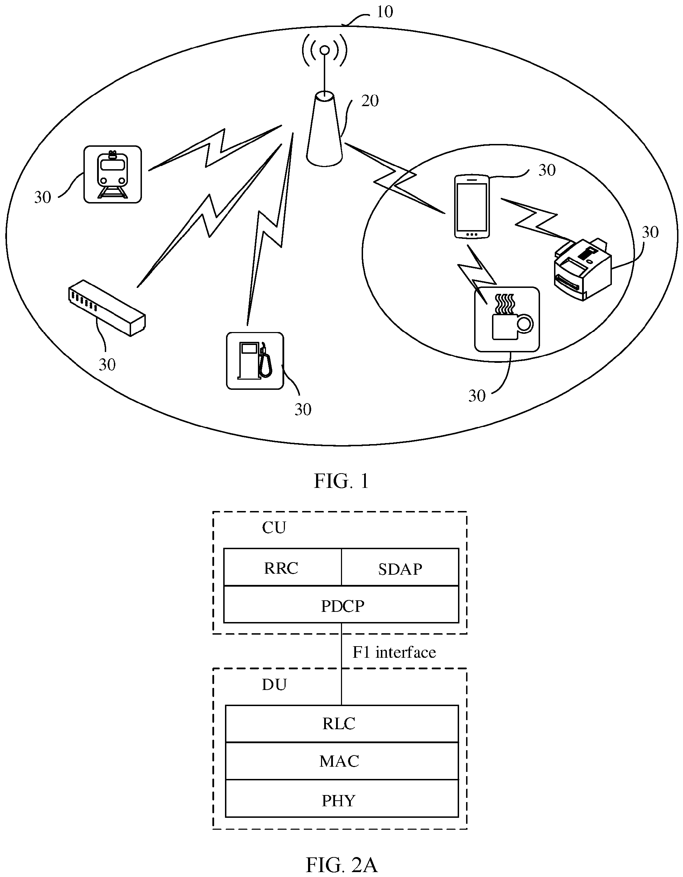

FIG. 1 is a diagram of a communication system to which an embodiment of this application is applicable. As shown in FIG. 1, a communication system 10 includes one or more access network devices 20 and one or more terminal devices 30. An interface between the access network device and the terminal device may be a Uu interface (or referred to as an air interface), and data may be transmitted between the access network device 20 and the terminal device 30 via an air interface resource. For example, the terminal device may be located within communication coverage of one or more cells of the access network device, and there may be one or more cells serving the terminal device. When there are a plurality of cells serving the terminal device, the terminal device may work by using one or more of transmission technologies such as carrier aggregation (carrier aggregation, CA), dual connectivity (dual connectivity, DC), coordinated multipoint (coordinated multipoint, CoMP) transmission, and multiple transmission and reception points (multiple transmission and reception points, mTRP).

### (1) Terminal device

The terminal device is also be referred to as user equipment (user equipment, UE), a mobile station (mobile station, MS), a mobile terminal (mobile terminal, MT), or the like, and is a device that provides a user with voice and/or data connectivity, for example, a handheld device or a vehicle-mounted device having a wireless connection function. Currently, some examples of the terminal device are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), and a wireless terminal in a smart home (smart home).

### (2) Access network device

The access network device is a radio access network (radio access network, RAN) node (or device) that connects a terminal to a wireless network, and may also be referred to as a base station. Currently, some examples of the RAN node are a NodeB (NodeB, NB), a continuously evolved NodeB (gNB), a transmission reception point (transmission reception point, TRP), an evolved NodeB (evolved NodeB, eNB), a radio network controller (radio network controller, RNC), a base station controller (base station controller, BSC), a base transceiver station (base transceiver station, BTS), a home base station (for example, a home evolved NodeB or a home NodeB, HNB), a baseband unit (baseband unit, BBU), and a wireless fidelity (wireless fidelity, Wi-Fi) access point (access point, AP).

### (3) Communication between a terminal device and an access network device

Communication between the terminal device and the access network device is performed in accordance with a specific protocol layer structure. For example, a control plane protocol layer structure may include a radio resource control (radio resource control, RRC) layer, a packet data convergence protocol (packet data convergence protocol, PDCP) layer, a radio link control (radio link control, RLC) layer, a media access control (media access control, MAC) layer, and a physical layer (physical layer, PHY). A user plane protocol layer structure may include a PDCP layer, an RLC layer, a MAC layer, and a physical layer. In a possible implementation, a service data adaptation protocol (service data adaptation protocol, SDAP) layer may be further included above the PDCP layer. The SDAP layer, the PDCP layer, the RLC layer, the MAC layer, and the physical layer may be collectively referred to as an access stratum. For specific descriptions of the foregoing protocol layers, refer to related technical specifications of the 3rd generation partnership project (3rd generation partnership project, 3GPP).

### (4) CU-DU split architecture

For example, in some possible network structures, an access network device may include one or more central units (central units, CUs) and one or more distributed units (distributed units, DUs), and a plurality of DUs may be centrally controlled by one CU. This architecture may be referred to as the CU-DU split architecture. For example, an interface between the CU and the DU may be referred to as an F 1 interface. A control plane (control plane, CP) interface may be an F1-C interface, and a user plane (user plane, UP) interface may be an F 1-U interface.

Processing functions of the CU and the DU may be divided based on protocol layers of a wireless network. For example, as shown in FIG. 2A, functions of a PDCP layer and protocol layers above the PDCP layer are set on the CU, and functions of protocol layers (for example, an RLC layer and a MAC layer) below the PDCP layer are set on the DU. It may be understood that, division into processing functions of the CU and the DU based on the protocol layers is merely an example, and the processing functions may alternatively be divided in another manner. For example, functions of the protocol layers above the RLC layer are set on the CU, and functions of the RLC layer and the protocol layers below the RLC layer are set on the DU. For another example, the CU or the DU may have more functions of the protocol layers through division. For another example, the CU or the DU may further have some processing functions of the protocol layers through division. This is not limited in embodiments of this application.

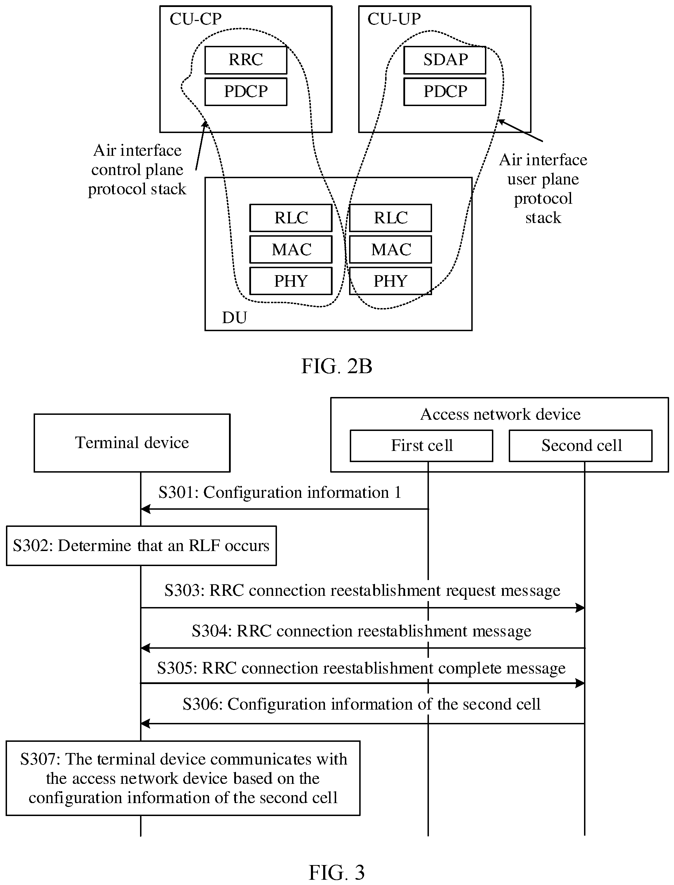

Further, the functions of the CU may be implemented by using one entity or different entities. For example, functions of a CU may be further divided, that is, a control plane and a user plane are split, and are implemented by using different entities: a control plane CU entity (namely, a CU-CP entity) and a user plane CU entity (namely, a CU-UP entity). The CU-CP entity and the CU-UP entity may be coupled to a DU, to jointly complete a function of a RAN device. An interface between the CU-CP entity and the CU-UP entity may be an E1 interface, an interface between the CU-CP entity and the DU may be an F1-C interface, and an interface between the CU-UP entity and the DU may be an F1-U interface. One DU and one CU-UP may be connected to one CU-CP. Under control of a same CU-CP, one DU may be connected to a plurality of CU-UPs, and one CU-UP may be connected to a plurality of DUs. Under coordination of a plurality of CU-CPs, one CU-UP may alternatively be connected to a plurality of coordinated CU-CPs, thereby improving flexibility of the CU-CP. FIG. 2B is a diagram of air interface protocol stack distribution. As shown in FIG. 2B, for both a user plane and a control plane, an air interface protocol stack may be that an RLC layer, a MAC layer, and a PHY layer are on a DU, and a PDCP layer and protocol layers above the PDCP layer are on a CU.

It should be noted that in the architectures shown in FIG. 2A and FIG. 2B, signaling generated by the CU may be sent to the terminal device through the DU, or signaling generated by the terminal device may be sent to the CU through the DU. The DU may transparently transmit the signaling to the terminal device or the CU by directly encapsulating the signaling at a protocol layer without parsing the signaling. In the following embodiments, if transmission of such signaling between the DU and the terminal device is involved, sending or receiving of the signaling by the DU includes this scenario. For example, signaling at the RRC layer or the PDCP layer is finally processed as data at a physical layer and sent to the terminal device, or is converted from received data at a physical layer. In this architecture, it may also be considered that the signaling at the RRC layer or the PDCP layer is sent by the DU, or sent by the DU and a radio frequency apparatus.

It may be understood that a quantity of access network devices and a quantity of terminal devices included in the communication system are not limited in this embodiment of this application. Moreover, in addition to the access network device and the terminal device, the communication system may further include another device or network element, such as a core network device or a relay device. This is not limited in this embodiment of this application.

The communication system shown in FIG. 1 may support various radio access technologies (radio access technology, RAT). For example, the communication system shown in FIG. 1 may be a 4th generation (4th generation, 4G) communication system (which may also be referred to as a long term evolution (long term evolution, LTE) communication system), a 5th generation (5th generation, 5G) communication system (which may also be referred to as a new radio (new radio, NR) communication system), a wireless fidelity (wireless fidelity, Wi-Fi) system, or a future-oriented evolved system. A communication system and a service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the communication system evolves and a new service scenario emerges.

The following first describes related technical features in embodiments of this application. It should be noted that these explanations are intended to make embodiments of this application easier to understand, but should not be considered as a limitation on the protection scope claimed in this application.

### 1. Cell handover

The cell handover may include a cell handover implemented based on a layer 1/layer 2 (referred to as a layer 1/layer 2 handover for short) and a cell handover implemented based on a layer 3 (referred to as a layer 3 handover for short). The cell handover implemented based on the layer 1/layer 2 may be a cell handover implemented based on the layer 1 or the layer 2, or may be a cell handover implemented based on the layer 1 and the layer 2. The layer 1 may be a physical layer, the layer 2 may be a MAC layer, and the layer 3 may be an RRC layer.

Further, the layer 1/layer 2 handover may include the following two types:
(1) Layer 1/Layer 2 handover triggered by an access network device: For example, the access network device selects, based on a beam-level measurement result reported by a terminal device, a target cell that meets a layer 1/layer 2 handover criterion from candidate cells corresponding to the layer 1/layer 2 handover, and sends a layer 1/layer 2 handover instruction to the terminal device, to instruct to hand over the terminal device to the target cell. The beam-level measurement result may also be referred to as a layer 1 measurement result.
(2) Layer 1/Layer 2 handover triggered by a terminal device, also referred to as a layer 1/layer 2 conditional handover (conditional handover, CHO): For example, the terminal device selects, based on a beam-level measurement result, a target cell that meets a layer 1/layer 2 handover criterion from candidate cells corresponding to the layer 1/layer 2 handover, and triggers an autonomous handover to the target cell, without an access network device delivering a handover instruction.

The layer 3 handover may include the following two types:
(1) Layer 3 handover triggered by an access network device: For example, the access network device selects, based on a cell-level measurement result reported by a terminal device, a target cell that meets a layer 3 handover criterion from candidate cells corresponding to the layer 3 handover, and sends a layer 3 handover instruction to the terminal device, to instruct to hand over the terminal device to the target cell. The cell-level measurement result may also be referred to as a layer 3 measurement result.
(2) Layer 3 handover triggered by a terminal device, also referred to as a layer 3 CHO: For example, the terminal device selects, based on a cell-level measurement result, a target cell that meets a layer 3 handover criterion from candidate cells corresponding to the layer 3 handover, and triggers an autonomous handover to the target cell, without an access network device delivering a handover instruction.

### 2. Beam-level measurement result and cell-level measurement result

In a possible implementation, a process in which a terminal device obtains the beam-level measurement result may be as follows: An access network device sends reference signals in a plurality of beam directions of a cell. The reference signal may be a synchronization signal/physical broadcast channel block (synchronization signal/physical broadcast channel block, SSB), a channel state information reference signal (channel state information reference signal, CSI-RS), a channel sounding reference signal (sounding reference signal, SRS), or may be another possible reference signal. This is not specifically limited. Correspondingly, the terminal device performs measurement based on a reference signal on a time-frequency resource indicated by the access network device. For example, the terminal device may obtain, through sampling, a plurality of transitory signal strengths in a time period that are of a beam corresponding to the reference signal, and weight or combine the plurality of obtained signal strengths, to obtain a measurement result of the beam. The measurement result of the beam may also be referred to as beam quality (beam quality). Further, the measurement result of the beam may be filtered through layer 1 filtering, to obtain a filtered measurement result of the beam. For example, a layer 1 filtering parameter may be configured by the access network device for the terminal device. Alternatively, the terminal device may filter the plurality of obtained signal strengths, to further obtain a filtered measurement result of the beam. The cell-level measurement result may be obtained by the terminal device by combining or weighting measurement results of a plurality of beams in a cell. For example, the measurement result of the cell may be obtained by combining at least one beam in the cell through configuration of the access network device. The measurement result of the cell may also be referred to as cell quality (cell quality). Further, the measurement result of the cell may be filtered through layer 3 filtering, to obtain a filtered measurement result of the cell. For example, a layer 3 filtering parameter may be configured by the access network device for the terminal device.

### 3. Radio link failure

To maintain reliability of communication between a terminal device and an access network device, the terminal device needs to perform radio link monitoring (radio link monitoring, RLM) in a serving cell, and determine, based on a radio link monitoring result, whether a radio link failure (radio link failure, RLF) occurs.

For example, when detecting that radio link quality of the serving cell is less than an out-of-synchronization threshold in a time window (for ease of description, the time window is referred to as a third time window below), a physical layer of the terminal device may report an "out-of-synchronization indication" to an RRC layer once; or when detecting that radio link quality of the serving cell is greater than or equal to an in-synchronization threshold in a third time window, a physical layer of the terminal device may report an "in-synchronization indication (in-sync indication)" to an RRC layer once. Further, if a quantity of "out-of-synchronization indications" consecutively detected by the terminal device at the RRC layer is higher than a threshold (for example, the threshold is N310), the terminal device starts a timer 1 (for example, the timer 1 is T310). If detecting no "in-synchronization indication" in a timing window of the timer 1, the terminal device may determine that an RLF occurs. If the timer 1 has been started and is running, when a quantity of "in-synchronization indications" consecutively detected by the terminal device at the RRC layer is greater than or equal to a threshold (for example, the threshold is N311), the terminal device may stop the timer 1, and consider that the radio link has been recovered and no RLF occurs. N310, N311, duration of the timing window of the timer 1, and duration of the third time window may be configured by the access network device for the terminal device.

It may be understood that the foregoing describes an example of a case in which the RLF occurs. The terminal device may further determine, in another possible case, that the RLF occurs. For example, the terminal device may further determine, when at least one of the following conditions is met, that the RLF occurs: (1) A problem occurs in random access, for example, a quantity of failures of initiating random access by the terminal device is greater than or equal to a preset threshold. (2) A quantity of retransmissions at the RLC layer exceeds a maximum quantity of retransmissions. (3) Consecutive uplink listen before talk (listen before talk, LBT) failures occur, that is, the terminal device fails to preempt a channel for a plurality of consecutive times.

### 4. Radio link quality

The radio link quality may be physical layer channel quality, for example, physical downlink control channel (physical downlink control channel, PDCCH) quality or physical downlink shared channel (physical downlink shared channel, PDSCH) quality.

For example, the radio link quality may be obtained based on a beam-level measurement result. For example, if a terminal device performs beam-level measurement on a cell 1, to obtain measurement results of N1 beams in the cell 1, the terminal device may use an average value of measurement results of at least one of the N1 beams as radio link quality of the cell 1, or the terminal device may use an average value of measurement results of N2 beams that have relatively good measurement results and that are of the N1 beams as radio link quality of the cell 1. N1 and N2 are positive integers, and N2 is less than N1.

Based on the descriptions of the foregoing related technical features, implementation of recovering a radio link by the terminal device is studied in embodiments of this application.

A possible communication method provided in this embodiment of this application is as follows: After a terminal device detects that a problem occurs on a radio link of a serving cell, the terminal device may select, through a cell selection (cell selection) procedure, a target cell that meets a cell selection criterion, and perform RRC reestablishment to access the target cell, to recover the radio link.

The following describes a possible implementation procedure with reference to FIG. 3.

FIG. 3 is a schematic flowchart corresponding to a communication method according to an embodiment of this application. As shown in FIG. 3, the method includes the following steps.

S301: After determining that a first cell managed by an access network device is a serving cell of a terminal device, the access network device may send configuration information 1 to the terminal device in the first cell.

For example, the access network device may send the configuration information 1 to the terminal device in a plurality of manners. For example, the access network device may send an RRC message to the terminal device in the first cell, where the RRC message includes the configuration information 1.

The configuration information 1 may include configuration information of the first cell and configuration information of at least one candidate cell of the terminal device. For example, the at least one candidate cell may include: a candidate cell corresponding to a layer 1/layer 2 handover, and/or a candidate cell corresponding to a layer 3 handover.

One of the candidate cells is used as an example, configuration information of the candidate cell may include configuration information of the terminal device in the candidate cell, and may further include other possible information, for example, related information of the candidate cell. This is not specifically limited. In addition, for the configuration information of the first cell, refer to the configuration information of the candidate cell. Details are not described again.

(1) The configuration information of the terminal device in the candidate cell may include at least one of the following: radio resource configuration information of the terminal device in the candidate cell; radio bearer (radio bearer, RB) configuration information of the terminal device in the candidate cell; multi-connectivity (multi-connectivity, MC) configuration information of the terminal device in the candidate cell, where multi-connectivity may be one or a combination of DC, CA, CoMP, and mTRP; and a cell radio network temporary identifier (cell radio network temporary identifier, C-RNTI) allocated by the candidate cell to the terminal device. (2) The related information of the candidate cell may include at least one of the following: reference signal configuration information (for example, SSB configuration information, CSI-RS configuration information, and SRS configuration information) of the candidate cell; beam measurement configuration information of the candidate cell, for example, transmission configuration indicator (transmission configuration indicator, TCI) state configuration information; and a physical cell identifier (physical cell identifier, PCI) of the candidate cell.

It may be understood that the first cell and the candidate cell may belong to a same access network device, or the first cell and the candidate cell may belong to different access network devices. When the first cell and the candidate cell belong to different access network devices, an access network device to which the first cell belongs may obtain, through an Xn interface, configuration information of the candidate cell from an access network device to which the candidate cell belongs.

S302: The terminal device performs radio link monitoring in the first cell, and determines, based on a radio link monitoring result, that an RLF occurs. For a specific implementation in which the terminal device determines that the RLF occurs, refer to the foregoing description.

Herein, after determining that the RLF occurs, the terminal device releases the configuration information of the first cell (for example, suspends transmission of all radio bearers, that is, control plane signaling and user plane service data cannot be transmitted over the radio bearers), and further releases the configuration information of the at least one candidate cell that is sent by the access network device to the terminal device in the first cell.

S303: After the terminal device performs a cell selection procedure and selects, through the cell selection procedure, a cell (for example, a second cell) that meets a cell selection criterion, the terminal device actively initiates an RRC connection reestablishment procedure in the second cell. For example, the terminal device sends an RRC connection reestablishment request message to the access network device in the second cell through a random access procedure.

For a specific implementation of the cell selection procedure, refer to the conventional technology.

S304: After receiving, in the second cell, the RRC connection reestablishment request message from the terminal device, the access network device may send an RRC connection reestablishment message to the terminal device, where the RRC connection reestablishment message indicates that the second cell currently accessed by the terminal device is a new serving cell of the terminal device.

S305: After receiving the RRC connection reestablishment message, the terminal device sends an RRC connection reestablishment complete message to the access network device.

S306: After the terminal device completes the RRC reestablishment procedure, the access network device may send a configuration message of the second cell to the terminal device in the second cell, and correspondingly, the terminal device may receive configuration information of the second cell.

S307: The terminal device communicates with the access network device (that is, recovers a radio link) based on the configuration information of the second cell, for example, recovers transmission of the radio bearer.

It can be learned from the procedure shown in FIG. 3 that the terminal device may perform RRC reestablishment to recover the radio link. However, in the RRC reestablishment procedure, the terminal device releases the configuration information of the at least one candidate cell. Therefore, even if the terminal device selects one of the candidate cells as a new serving cell, the access network device still needs to resend configuration information of the new serving cell to the terminal device. Consequently, transmission resource consumption is large. In addition, the terminal device needs to release the configuration information of the first cell (for example, suspend transmission of all radio bearers), and can recover transmission of the radio bearer only after RRC reestablishment is completed. Consequently, a communication interruption delay is large.

Another possible communication method provided in this embodiment of this application is as follows: After the terminal device detects that a problem occurs on a radio link of a serving cell, the terminal device may select a target cell. If the target cell is a candidate cell corresponding to a cell handover, the terminal device may perform the cell handover for a handover to the target cell, to recover the radio link; or if the target cell is not a candidate cell corresponding to a cell handover, the terminal device may perform RRC reestablishment to access the target cell, to recover the radio link.

It should be noted that an implementation of "the terminal device selects a target cell" herein may be different from an implementation of selecting the target cell by the terminal device in the foregoing layer 1/layer 2 CHO and an implementation of selecting the target cell by the terminal device in the foregoing layer 3 CHO. When the target cell is a candidate cell corresponding to the layer 1/layer 2 handover, an implementation of "handing over the terminal device to the target cell" herein may be the same as an implementation of handing over the terminal device to the target cell in the foregoing layer 1/layer 2 CHO. When the target cell is a candidate cell corresponding to the layer 3 handover, an implementation of "handing over the terminal device to the target cell" herein may be the same as an implementation of handing over the terminal device to the target cell in the foregoing layer 3 CHO.

The following describes some possible implementations of the foregoing communication method with reference to Embodiment 1.

### Embodiment 1

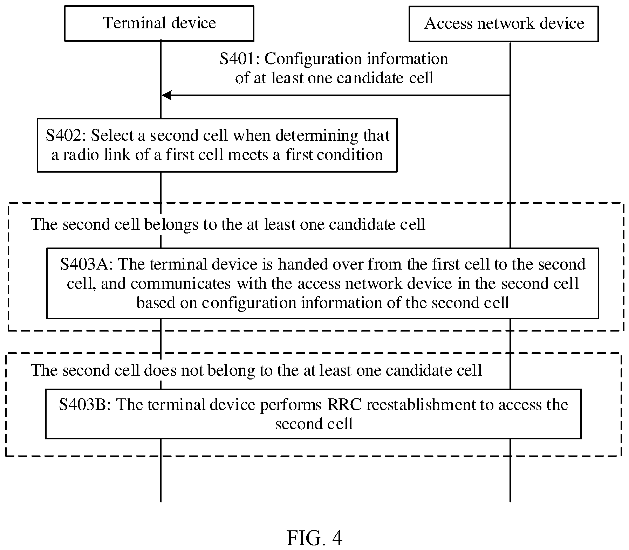

FIG. 4 is a schematic flowchart corresponding to a communication method according to Embodiment 1 of this application. As shown in FIG. 4, the method includes the following steps.

S401: An access network device sends configuration information of at least one candidate cell to a terminal device in a first cell, and correspondingly, the terminal device may receive the configuration information of the at least one candidate cell in the first cell. For details, refer to S301.

For example, the access network device may further send enabling information to the terminal device in the first cell, where the enabling information is used to enable the terminal device to trigger a cell handover after a problem occurs on a radio link of a serving cell. Correspondingly, the terminal device may receive the enabling information, and may further perform a subsequent method procedure shown in FIG. 4. Otherwise (that is, the access network device sends no enabling information to the terminal device, and correspondingly, the terminal device receives no enabling information), refer to FIG. 3.

S402: The terminal device selects a second cell when determining that a radio link of the first cell meets a first condition, where the second cell may also be referred to as a target cell.

For example, that radio link quality of the first cell meets the first condition may include at least one of the following: (1) The radio link quality of the first cell is less than a first threshold; (2) the radio link quality of the first cell is always less than the first threshold in a first time window; (3) a quantity of out-of-synchronization indications consecutively detected by the terminal device is greater than or equal to a second threshold; (4) after the quantity of out-of-synchronization indications consecutively detected by the terminal device is greater than or equal to the second threshold, the terminal device starts a timer 2, and detects no in-synchronization indication in a timing window of the timer 2; and (5) an RLF occurs in the first cell. "Less than" may be replaced with "lower than", and "greater than" may be replaced with "higher than". The first condition may be configured by the access network device for the terminal device. For example, the access network device sends first information to the terminal device in the first cell, and the first information is used to configure the first condition (for example, the first information includes a first threshold, a second threshold, duration of the timing window of the timer 2, and duration of the first time window). The first threshold may be different from an out-of-synchronization threshold, the second threshold may be different from N310, and the first time window and a third time window may be the same or may be different. This is not specifically limited.

There may be a plurality of specific implementations in which the terminal device selects the second cell. Two possible implementations are described below with reference to Implementation 1 and Implementation 2 by using an example in which "the at least one candidate cell includes a candidate cell corresponding to a layer 1/layer 2 handover and a candidate cell corresponding to a layer 3 handover, where candidate cells corresponding to a layer 1/layer 2 handover include a cell a and a cell b, and candidate cells corresponding to a layer 3 handover include the cell b and a cell c". It may be understood that the at least one candidate cell may include only the candidate cells corresponding to the layer 1/layer 2 handover, that is, {cell a, cell b}; or the at least one candidate cell may include only the candidate cells corresponding to the layer 3 handover, that is, {cell b, cell c}. For example, the access network device may configure, for the terminal device, at least one candidate cell that includes only a candidate cell corresponding to a layer 1/layer 2, or includes only a candidate cell corresponding to a layer 3 handover, or includes a candidate cell corresponding to a layer 1/layer 2 and a candidate cell corresponding to a layer 3, or may be agreed on in a protocol.

### Implementation 1

The terminal device may select the second cell from {cell a, cell b, cell c} based on radio link quality or a cell-level measurement result of at least one candidate cell (that is, {cell a, cell b, cell c}).

**For a case** in which the terminal device selects the second cell from the at least one candidate cell based on the radio link quality of the at least one candidate cell, a possible implementation is as follows: The terminal device determines, based on the radio link quality of {cell a, cell b, cell c}, whether there is a cell whose radio link quality meets a second condition in { cell a, cell b, cell c}. If there is a cell whose radio link quality meets the second condition in {cell a, cell b, cell c}, the cell is used as the second cell. In this case, the second cell belongs to the at least one candidate cell, that is, the second cell is one of {cell a, cell b, cell c}. That radio link quality of the second cell meets the second condition may include at least one of the following: (1) The radio link quality of the second cell is greater than or equal to a third threshold; (2) the radio link quality of the second cell is always greater than or equal to the third threshold in a second time window; (3) the radio link quality of the second cell is greater than or equal to radio link quality of a candidate cell other than the second cell in the at least one candidate cell; (4) the radio link quality of the second cell is always greater than or equal to the radio link quality of the candidate cell other than the second cell in the at least one candidate cell in the second time window; (5) the radio link quality of the second cell is greater than the radio link quality of the first cell; (6) the radio link quality of the second cell is always greater than the radio link quality of the first cell in the second time window; (7) the radio link quality of the second cell is greater than a sum of the radio link quality of the first cell and an offset; and (8) the radio link quality of the second cell is always greater than the sum of the radio link quality of the first cell and the offset in the second time window. The offset may be a positive value, or may be a negative value.

It may be understood that, in the at least one candidate cell, only one cell may meet the second condition, or a plurality of cells may meet the second condition. When a plurality of cells in the at least one candidate cell meet the second condition, for example, both a cell a and a cell b in {cell a, cell b, cell c} meet the second condition, the following three manners may exist: **Manner 1:** The terminal device may select one of the cell a and the cell b as the second cell based on beam-level measurement results of the cell a and the cell b. For example, if there is one beam (referred to as a beam 1) in the cell a, and a measurement result of the beam 1 is better than measurement results of all beams of the cell b, the terminal device may select the cell a as the second cell. **Manner 2:** The terminal device may select one of the cell a and the cell b as the second cell based on cell-level measurement results of the cell a and the cell b. For example, if a measurement result of the cell a is better than a measurement result of the cell b, the terminal device may select the cell a as the second cell. **Manner 3:** This depends on an internal implementation of the terminal device, that is, the terminal device itself determines to select the cell a or the cell b as the second cell. For example, a specific manner in Manner 1, Manner 2, and Manner 3 may be agreed on in a protocol, or the access network device may indicate a specific manner to be used by the terminal device.

In addition, if there is no cell whose radio link quality meets the second condition in {cell a, cell b, cell c}, that is, the terminal device selects no suitable cell from {cell a, cell b, cell c}, the terminal device may perform a cell selection procedure, and select, through the cell selection procedure, a cell that meets a cell selection criterion, where the cell is the second cell. In this case, the second cell does not belong to the at least one candidate cell, that is, the second cell is a cell other than {cell a, cell b, cell c}.

**For a case** in which the terminal device selects the second cell from the at least one candidate cell based on the cell-level measurement result of the at least one candidate cell, a possible implementation is as follows: The terminal device determines, based on the cell-level measurement results of {cell a, cell b, cell c}, whether there is a cell whose cell-level measurement result meets a third condition in {cell a, cell b, cell c}. If there is a cell whose cell-level measurement result meets the third condition in {cell a, cell b, cell c}, the cell is used as the second cell. In this case, the second cell is one of {cell a, cell b, cell c}. That a cell-level measurement result of the second cell meets the third condition may include at least one of the following: (1) The cell-level measurement result of the second cell is greater than or equal to a fourth threshold; (2) the cell-level measurement result of the second cell is greater than or equal to a cell-level measurement result of a candidate cell other than the second cell in the at least one candidate cell; and (3) the cell-level measurement result of the second cell is greater than a cell-level measurement result of the first cell.

In addition, if there is no cell whose cell-level measurement result meets the third condition in {cell a, cell b, cell c}, that is, the terminal device selects no suitable cell from {cell a, cell b, cell c}, the terminal device may perform a cell selection procedure, and select, through the cell selection procedure, a cell that meets a cell selection criterion, where the cell is the second cell. In this case, the second cell does not belong to the at least one candidate cell. It should be noted that, generally, the terminal device performs the cell selection procedure in an idle state. In this case, the terminal device may perform the cell selection procedure in a first measurement period. However, in this embodiment of this application, the terminal device performs the cell selection procedure in a connected state to select a suitable target cell. In this case, the terminal device may perform the cell selection procedure in a second measurement period. The second measurement period may be less than the first measurement period. For example, in this embodiment of this application, the terminal device may perform the cell selection procedure based on real-time radio link quality of the cell.

In a possible implementation, the access network device may send second information to the terminal device, where the second information indicates the terminal device to select the second cell based on the radio link quality. Optionally, the second condition may be further configured for the second information. For example, the second information may include a third threshold, an offset, and duration of the second time window. Correspondingly, after receiving the second information, the terminal device may select the second cell based on the radio link quality of the at least one candidate cell. Otherwise (that is, the access network device sends no second information to the terminal device, and correspondingly, the terminal device receives no second information), the terminal device may select the second cell based on the cell-level measurement result of the at least one candidate cell.

### Implementation 2

The terminal device may select, based on radio link quality or cell-level measurement results of cells included in a second candidate cell list, the second cell from the cells included in the second candidate cell list. The second candidate cell list may be different from a first candidate cell list, and the first candidate cell list includes the at least one candidate cell, that is, the first candidate cell list may be {cell a, cell b, cell c}. In an example, in addition to all cells included in the first candidate cell list, the second candidate cell list may further include another cell. For example, the second candidate cell list is {cell a, cell b, cell c, cell d}. In this case, for an implementation of the second cell selected by the terminal device, refer to Implementation 1. The second cell selected by the terminal device may belong to the at least one candidate cell, or may not belong to the at least one candidate cell.

For example, the second candidate cell list may be configured by the access network device for the terminal device. For example, the access network device may send cell list configuration information to the terminal device, where the cell list configuration information is used to configure the second candidate cell list.

Further, if the terminal device determines that the selected second cell belongs to the at least one candidate cell (for example, the second cell is a cell a, a cell b, or a cell c), the terminal device may suspend transmission of all radio bearers, but does not release the configuration information of the at least one candidate cell, and subsequently may perform S403A to recover the radio link. If the terminal device determines that the selected second cell does not belong to the at least one candidate cell (for example, the second cell is a cell d), the terminal device may suspend transmission of all radio bearers, release the configuration information of the at least one candidate cell, and subsequently perform S403B to recover the radio link.

S403A: The terminal device is handed over from the first cell to the second cell, and communicates with the access network device in the second cell based on configuration information of the second cell.

Herein, if the second cell is a cell a, the terminal device may perform a layer 1/layer 2 handover for a handover from the first cell to the second cell. If the second cell is a cell c, the terminal device may perform a layer 3 handover for a handover from the first cell to the third cell. If the second cell is a cell b (that is, the second cell is both a candidate cell corresponding to the layer 1/layer 2 handover and a candidate cell corresponding to the layer 3 handover), the following three manners may exist: **Manner 1:** The terminal device performs the layer 1/layer 2 handover for a handover from the first cell to the second cell. **Manner 2:** The terminal device performs the layer 3 handover for a handover from the first cell to the second cell. **Manner 3:** This depends on an internal implementation of the terminal device, that is, the terminal device itself determines to perform the layer 1/layer 2 handover for a handover from the first cell to the second cell or perform the layer 3 handover for a handover from the first cell to the second cell. For example, a specific manner in Manner 1, Manner 2, and Manner 3 may be agreed on in a protocol, or the access network device may indicate a specific manner to be used by the terminal device.

For example, after performing a handover from the first cell to the second cell, the terminal device may notify, in the second cell, the access network device that the terminal device has been handed over from the first cell to the second cell, and the handover is a cell handover triggered by the terminal device. For example, the handover is a cell handover triggered by the terminal device to select the second cell based on the foregoing manner (for example, Implementation 1 or Implementation 2). There may be a plurality of specific notification manners, for example, a notification manner 1 and a notification manner 2.

**Notification manner 1:** The terminal device may send third information to the access network device in the second cell, where the third information indicates that the terminal device has been handed over from the first cell to the second cell, and the handover is a cell handover triggered by the terminal device. In other words, the terminal device may notify the access network device in an explicit manner. The third information may include at least one of the following: an identifier of the terminal device; an identifier of the first cell (that is, an identifier of a source cell); and indication information a, where the indication information a indicates the cell handover triggered by the terminal device. For example, the third information may be carried in a message in a random access procedure initiated by the terminal device in the second cell. For example, if the random access procedure is a four-step random access procedure, the third information may be carried in a message 3 in the four-step random access procedure; or if the random access procedure is a two-step random access procedure, the third information may be carried in a message A in the two-step random access procedure. Further, optionally, the third information may be carried in a MAC control element (control element, CE) in the message 3 or the message A. Alternatively, the third information may be carried in a message other than the message in the random access procedure.

**Notification manner 2:** The terminal device may send fourth information to the access network device in the second cell, where the fourth information is carried on a first resource, and the first resource is a resource corresponding to a cell handover triggered by the terminal device. In other words, the terminal device may notify the access network device in an implicit manner. The fourth information may be carried in a message (for example, the message 3 or the message A) in a random access procedure initiated by the terminal device in the second cell, or may be carried in a message other than the message in the random access procedure. For example, the first resource may be a physical uplink control channel (physical uplink control channel, PUCCH) resource, and the first resource may be configured by the access network device for the terminal device. For example, the access network device may send fifth information to the terminal device in the first cell, where the fifth information is used to configure the first resource.

For example, after performing a handover from the first cell to the second cell, the terminal device may further send downlink beam information to the access network device in the second cell. The downlink beam information indicates a downlink beam used by the access network device to send downlink data to the terminal device in the second cell. The downlink beam may be a beam narrower than a beam corresponding to a target SSB, and the target SSB may be an SSB associated with a random access resource used by the terminal device to initiate random access in the second cell. For example, the downlink beam information may be included in the third information or the fourth information, or may be additionally sent by the terminal device to the access network device. This is not specifically limited.

The downlink beam information may indicate a beam (for example, a first beam), and the first beam may be a beam with an optimal measurement result in a plurality of beams that are of the second cell and that are determined by the terminal device. Correspondingly, the access network device may send the downlink data to the terminal device in the second cell based on the downlink beam information through the first beam. Alternatively, the downlink beam information may indicate a plurality of candidate beams determined by the terminal device. Correspondingly, the access network device may select one downlink beam (for example, a second beam) from the plurality of candidate beams based on the downlink beam information, and send the downlink data to the terminal device in the second cell through the second beam.

S403B: The terminal device performs RRC reestablishment to access the second cell.

Herein, the terminal device may release the configuration information of the at least one candidate cell, and initiate an RRC connection reestablishment procedure in the second cell. For a specific implementation, refer to FIG. 3.

It may be understood that, in the procedure shown in FIG. 4, the configuration information, the first information, the second information, the fifth information, the enabling information, and the like of the at least one candidate cell may be carried in a same message, or may be carried in different messages. This is not specifically limited.

According to the method in Embodiment 1, after the terminal device detects that a problem occurs on the radio link, the terminal device may not release the configuration information of the at least one candidate cell. After the terminal device selects one of the candidate cells as a new serving cell, the terminal device can communicate with the access network device based on configuration information of the new serving cell, and the access network device does not need to resend the configuration information of the new serving cell to the terminal device. This can effectively save transmission resources. In addition, the terminal device can trigger the cell handover for a handover from the source cell to the new serving cell. Therefore, compared with an RRC reestablishment procedure, this method can be used to quickly recover communication and effectively reduce a communication interruption delay.

The foregoing Embodiment 1 describes an implementation procedure of this embodiment of this application from a perspective of communication between the access network device and the terminal device. Because the access network device may include a CU and one or more DUs, the following describes some possible implementation procedures with reference to Embodiment 2 from a perspective of communication between the CU, the DU, and the terminal device.

### Embodiment 2

When the access network device includes a CU and one or more DUs, the first cell and the second cell in Embodiment 1 may belong to different DUs managed by the CU. For example, the first cell belongs to a first DU, and the second cell belongs to a second DU. Alternatively, the first cell and the second cell may belong to a same DU. For example, both the first cell and the second cell belong to a second DU. The following separately describes possible procedures for the two cases.

Case **1:** The first cell belongs to the first DU, and the second cell belongs to the second DU.

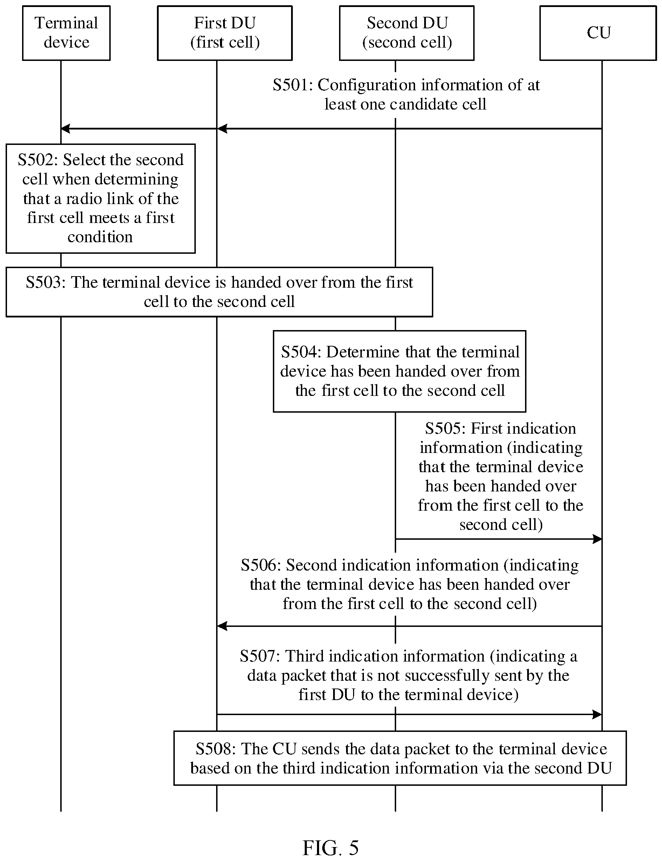

FIG. 5 is a schematic flowchart corresponding to a communication method according to Embodiment 2 of this application. As shown in FIG. 5, the method includes the following steps.

S501: A CU sends configuration information of at least one candidate cell to the terminal device via the first DU to which the first cell belongs, where the first cell is a serving cell of the terminal device.

For example, the CU may send an RRC message to the first DU, and then the first DU forwards the RRC message to the terminal device. The RRC message includes the configuration information of the at least one candidate cell.

S502: The terminal device selects the second cell when determining that a radio link of the first cell meets a first condition.

Herein, an example in which the second cell belongs to the at least one candidate cell is used for description.

S503: The terminal device is handed over from the first cell to the second cell.

For specific implementations of S501 to S503, refer to Embodiment 1.

S504: The second DU determines that the terminal device has been handed over from the first cell to the second cell.

Herein, there may be a plurality of implementations in which the second DU determines that the terminal device has been handed over from the first cell to the second cell. For example, the terminal device may send third information to the second DU. Correspondingly, after receiving the third information from the terminal device, the second DU may determine that the terminal device has been handed over from the first cell to the second cell. For another example, the terminal device may send fourth information to the second DU. Correspondingly, after receiving the fourth information (the fourth information is carried on a first resource) from the terminal device, the second DU may determine that the terminal device has been handed over from the first cell to the second cell. For a specific implementation, refer to Embodiment 1.

S505: The second DU sends first indication information to the CU, where the first indication information indicates that the terminal device has been handed over from the first cell to the second cell.

Optionally, the second DU may further send first downlink data delivery status (downlink data delivery status, DDDS) information to the CU, where the first DDDS information is used by the CU to control traffic of downlink data sent to the terminal device via the second DU. For example, the first DDDS information may include a data amount already cached by the second DU.

For example, the first indication information may include at least one of the following: an identifier of the terminal device; an identifier of the second cell (that is, an identifier of a target cell); and indication information b, where the indication information b indicates a cell handover triggered by the terminal device.

In a possible implementation, the indication information b may be the first DDDS information (that is, the cell handover triggered by the terminal device is implicitly indicated by using the first DDDS information). In this case, the indication information b in the first indication information may be transmitted by using a user plane data frame over an F1 interface, and other information (for example, the identifier of the terminal device and/or the identifier of the second cell) may be transmitted by using the user plane data frame, or may be transmitted by using a control plane message over the F1 interface. This is not specifically limited. In another possible implementation, the indication information b may alternatively be other possible information. In this case, the first indication information may be transmitted by using a control plane message of an F 1 interface message.

S506: The CU sends second indication information to the first DU, where the second indication information indicates that the terminal device has been handed over from the first cell to the second cell. Correspondingly, the first DU receives the second indication information, and stops communicating with the terminal device (for example, stops sending downlink data to the terminal device).

For example, the second indication information may include at least one of the following: an identifier of the terminal device; an identifier of the second cell; and indication information c, where the indication information c indicates a cell handover triggered by the terminal device. The second indication information may be carried in the control plane message over the F 1 interface.

S507: The first DU sends third indication information to the CU, where the third indication information indicates a data packet that is not successfully sent by the first DU to the terminal device. Further, the first DU may stop sending the downlink data to the terminal device.

For example, the third indication information may include at least one of the following: a sequence number (sequence number, SN) of a PDCP PDU that is not successfully sent by the first DU; and a highest sequence number of a PDCP PDU that is successfully sent by the first DU.

For example, the third indication information may be included in second DDDS information, and is transmitted by using a user plane data frame over an F1 interface; or the third indication information may be transmitted by using a control plane message over an F1 interface. This is not specifically limited.

S508: The CU sends the data packet to the terminal device based on the third indication information via the second DU.

For example, if the third indication information includes sequence numbers of the PDCP PDU that is not successfully sent by the first DU, the CU may retransmit, via the second DU, the PDCP PDU corresponding to the sequence numbers. If the third indication information includes a highest sequence number of the PDCP PDU that is successfully sent by the first DU, the CU may send, to the terminal device via the second DU, a PDCP PDU after the highest sequence number.

In addition, from a perspective of the second DU, the terminal device may further send downlink beam information to the second DU (for the downlink beam information, refer to Embodiment 1). Therefore, in S505, the second DU may send the data packet to the terminal device based on the downlink beam information through a corresponding downlink beam.

**Case 2:** Both the first cell and the second cell belong to the second DU.

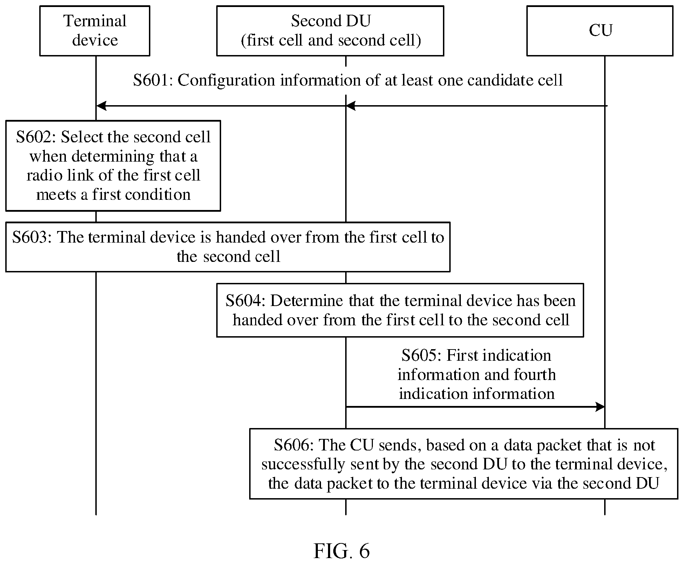

FIG. 6 is a schematic flowchart corresponding to the communication method according to Embodiment 2 of this application. As shown in FIG. 6, the method includes the following steps.

S601: A CU sends configuration information of at least one candidate cell to the terminal device via the second DU to which the first cell belongs, where the first cell is a serving cell of the terminal device.

S602: The terminal device selects the second cell when determining that a radio link of the first cell meets a first condition.

Herein, an example in which the second cell belongs to the at least one candidate cell is used for description.

S603: The terminal device is handed over from the first cell to the second cell.

For specific implementations of S601 to S603, refer to Embodiment 1.

S604: The second DU determines that the terminal device has been handed over from the first cell to the second cell.

S605: The second DU sends first indication information and fourth indication information to the CU, where the first indication information indicates that the terminal device has been handed over from the first cell to the second cell, and the fourth indication information indicates a data packet that is not successfully sent by the second DU to the terminal device.

Herein, for the fourth indication information, refer to the description of the third indication information.

S606: The CU sends, based on the data packet that is not successfully sent by the second DU to the terminal device, the data packet to the terminal device via the second DU.

For specific implementations of the foregoing steps shown in FIG. 6, refer to FIG. 5.

According to the method in Embodiment 2, after detecting that a problem occurs on the radio link of the first cell, the terminal device may be handed over from the first cell to the second cell (the second cell belongs to the at least one candidate cell), and communicate with a target DU (that is, the DU to which the second cell belongs) based on configuration information that is of the second cell and that is received in the first cell, without a need for the CU to resend the configuration information of the second cell to the terminal device. This can effectively save transmission resources and reduce a communication interruption delay. Further, a source DU (that is, the DU to which the first cell belongs) may send the indication information to the CU to indicate the data packet that is not successfully sent by the source DU to the terminal device, so that the CU can send the unsuccessfully sent data packet to the terminal device via the target DU, and a data packet loss risk is effectively avoided.

It may be understood that in Embodiment 2, the solution described in "S501 to S504" or "S601 to S604" is as follows: The terminal device selects the second cell based on the manner in Embodiment 1, and performs a layer 1/layer 2 handover for a handover from the first cell to the second cell. Further, the second DU can determine, based on the third information or the fourth information sent by the terminal device, that the terminal device has been handed over from the first cell to the second cell. In another possible embodiment, "S501 to S504" or "S601 to S604" may be replaced with the following: The terminal device is handed over from the first cell to the second cell through a layer 1/layer 2 CHO. Further, the second DU can determine, based on handover complete information sent by the terminal device, that the terminal device has been handed over from the first cell to the second cell. For example, the handover complete information may be a layer 1/layer 2 message, and the handover complete information may include downlink beam information. Alternatively, the terminal device may additionally send downlink beam information to the second DU.

### Embodiment 3

In Embodiment 3, a possible implementation procedure of a layer 1/layer 2 handover triggered by an access network device (a layer 3 handover triggered by the access network device may be implemented with reference thereto) is described from a perspective of communication between a CU, DUs, and a terminal device.

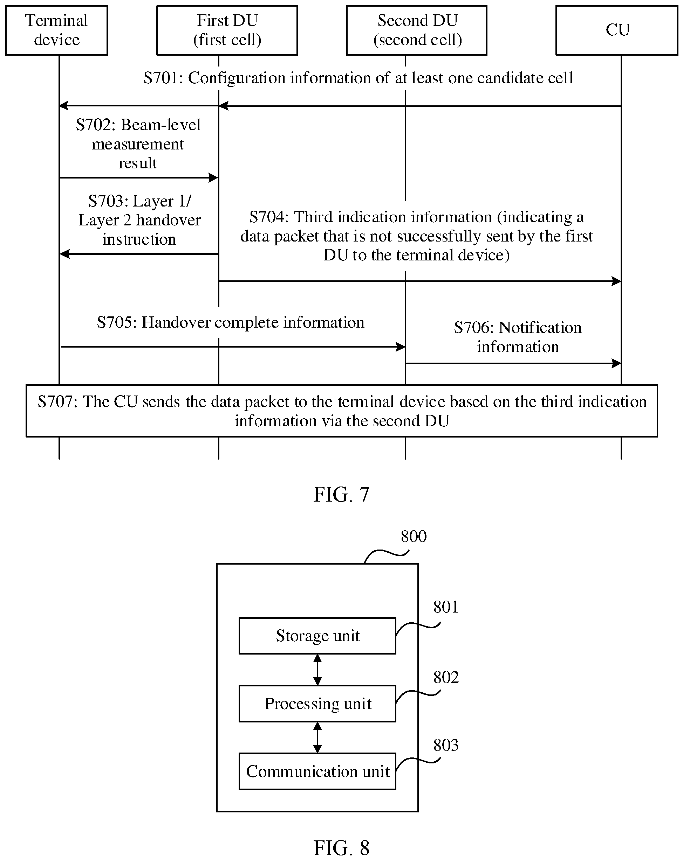

FIG. 7 is a schematic flowchart corresponding to a communication method according to Embodiment 3 of this application. As shown in FIG. 7, the method includes the following steps.

S701: The CU sends configuration information of at least one candidate cell to the terminal device via a first DU to which a first cell belongs.

Herein, the at least one candidate cell may include a candidate cell corresponding to the layer 1/layer 2 handover.

S702: The terminal device performs beam-level measurement on the first cell and the at least one candidate cell, and reports a beam-level measurement result to the first DU.

S703: The first DU selects one target cell from the at least one candidate cell based on the beam-level measurement result, for example, the target cell is a second cell, and sends a layer 1/layer 2 handover instruction to the terminal device, where the handover instruction instructs to hand over the terminal device from the first cell to the second cell. Correspondingly, the terminal device receives the handover instruction, and is handed over from the first cell to the second cell according to the handover instruction.

Herein, for an implementation of selecting the target cell by the first DU based on the beam-level measurement result, refer to the conventional technology.

For example, the layer 1 handover instruction may be downlink control information (downlink control information, DCI), and the layer 2 handover instruction may be a MAC CE. The handover instruction may include identity information of the second cell and downlink beam information, and the downlink beam information indicates a downlink beam used by a second DU to which the second cell belongs to send downlink data to the terminal device.

S704: The first DU sends third indication information to the CU, where the third indication information indicates a data packet that is not successfully sent by the first DU to the terminal device. Further, the first DU may stop sending the downlink data to the terminal device.

S705: The terminal device sends handover complete information to the second DU, where the handover complete information indicates that the terminal device has been handed over from the first cell to the second cell.

Optionally, the terminal device may further send downlink beam information to the second DU. In a possible implementation, the downlink beam information sent by the terminal device to the second DU may be the downlink beam information carried in the layer 1/layer 2 handover instruction in S703. Subsequently, the second DU may send a data packet to the terminal device based on the downlink beam information through a corresponding downlink beam.

In a possible implementation, the handover complete information may be a layer 1/layer 2 message. In this case, the handover complete information may include the downlink beam information. Alternatively, the terminal device may additionally send the downlink beam information to the second DU.

S706: The second DU sends notification information to the CU, where the notification information is used to notify the CU that the terminal device has been handed over from the first cell to the second cell.

For example, the notification information may include first DDDS information, and the first DDDS information may include a data amount already cached by the second DU.

S707: The CU sends the data packet to the terminal device based on the third indication information via the second DU.

According to the method in Embodiment 3, after sending the handover instruction to the terminal device, the first DU may send the third indication information to the CU, so that the CU can send unsuccessfully sent data packets to the terminal device via a target DU (that is, the second DU), and a data packet loss risk is effectively avoided. In addition, the terminal device can send the downlink beam information to the second DU, so that the second DU can send the downlink data to the terminal device based on the downlink beam information through a corresponding beam.

For Embodiment 1 to Embodiment 3, it may be understood that:
(1) Embodiment 1 to Embodiment 3 are described by using an example in which a serving cell of a terminal device is one cell. In another possible case, for example, when the terminal device operates in a dual connectivity mode, the solutions in Embodiment 1 to Embodiment 3 may be applicable to a master base station handover in dual connectivity, or may be applicable to a secondary base station (secondary node, SN)/secondary cell group (secondary cell group, SCG) addition or a secondary base station/secondary cell group change. For example, after determining that a radio link of a cell of the secondary base station/secondary cell group meets the first condition, the terminal device may alternatively recover the radio link of the cell by using the method in Embodiment 1.
(2) Step numbers in the flowcharts described in Embodiment 1 to Embodiment 3 are merely an example of an execution procedure, and do not constitute a limitation on an execution sequence of the steps. In embodiments of this application, there is no strict execution sequence between steps that do not have a time sequence dependency relationship with each other. Not all steps shown in each flowchart are necessarily performed steps. Some steps may be deleted based on each flowchart according to an actual requirement, or other possible steps may be added based on each flowchart according to an actual requirement.
(3) The foregoing focuses on differences between different embodiments in Embodiment 1 to Embodiment 3, and Embodiment 1 to Embodiment 3 may refer to each other except for other content of the differences. In addition, in a same embodiment, different implementations or different examples may also refer to each other.

The foregoing mainly describes the solutions provided in embodiments of this application from a perspective of interaction between communication apparatuses. It may be understood that, to implement the foregoing functions, the terminal device and the access network device may include corresponding hardware structures and/or software modules for performing the functions. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional unit division may be performed on the terminal device and the access network device based on the foregoing method examples. For example, each functional unit may be obtained through division based on each corresponding function, or two or more functions may be integrated into one unit. The integrated unit may be implemented in a form of hardware, or may be implemented in a form of a software functional unit.

When an integrated unit is used, FIG. 8 is a block diagram of a possible example of an apparatus according to an embodiment of this application. As shown in FIG. 8, the apparatus 800 may include a processing unit 802 and a communication unit 803. The processing unit 802 is configured to control and manage an action of the apparatus 800. The communication unit 803 is configured to support communication between the apparatus 800 and another device. Optionally, the communication unit 803 is also referred to as a transceiver unit, and may include a receiving unit and/or a sending unit, respectively configured to perform a receiving operation and a sending operation. The apparatus 800 may further include a storage unit 801, configured to store program code and/or data of the apparatus 800.

The apparatus 800 may be the terminal device in the foregoing embodiments. The processing unit 802 may support the apparatus 800 in performing actions of the terminal device in the foregoing method examples. Alternatively, the processing unit 802 mainly performs an internal action of the terminal device in the method examples, and the communication unit 803 may support communication between the apparatus 800 and another device.

For example, in an embodiment, the communication unit 803 is configured to receive, in a first cell, configuration information of at least one candidate cell from an access network device; and the processing unit 802 is configured to: select a second cell when a radio link of the first cell meets a first condition; if the second cell belongs to the at least one candidate cell, perform a handover from the first cell to the second cell, and communicate with the access network device in the second cell via the communication unit 803 based on the configuration information that is of the second cell and that is received in the first cell; or if the second cell does not belong to the at least one candidate cell, perform RRC reestablishment to access the second cell.

The apparatus 800 may be the access network device in the foregoing embodiment. The processing unit 802 may support the apparatus 800 in performing actions of the access network device in the foregoing method examples. Alternatively, the processing unit 802 mainly performs an internal action of the access network device in the method examples, and the communication unit 803 may support communication between the apparatus 800 and another device.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SOC).

The foregoing unit for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit for sending is an interface circuit of the apparatus, and is configured to send a signal to another apparatus. For example, when the apparatus is implemented in a manner of a chip, the sending unit is an interface circuit that is of the chip and that is configured to send a signal to another chip or apparatus.

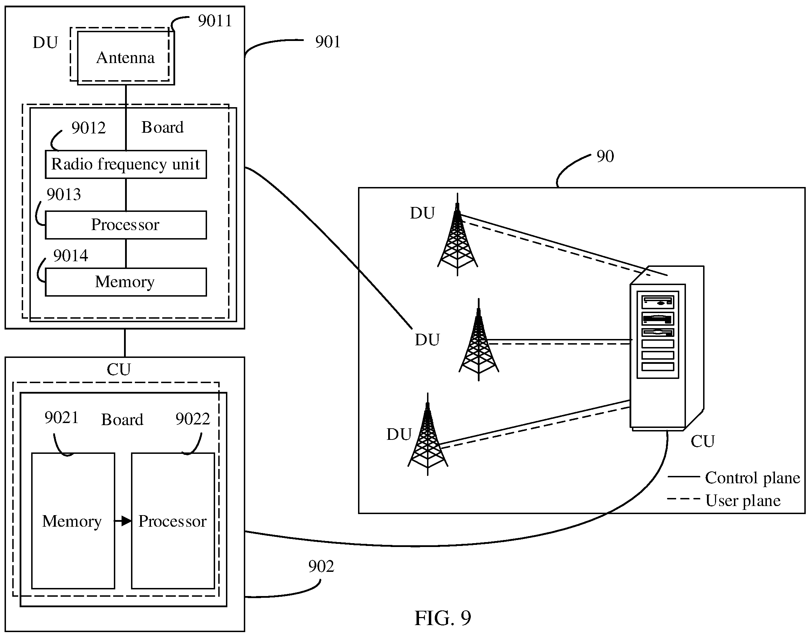

FIG. 9 is a diagram of a structure of an access network device according to an embodiment of this application. The access network device (or a base station) may be used in the communication system shown in FIG. 1, to perform functions of the access network device in the foregoing method embodiments. As shown in FIG. 9, the access network device 90 may include one or more DUs 901 and one or more CUs 902. The DU 901 may include at least one antenna 9011, at least one radio frequency unit 9012, at least one processor 9013, and at least one memory 9014. The DU 901 is mainly configured to receive/send a radio frequency signal, perform conversion between a radio frequency signal and a baseband signal, and perform partial baseband processing. The CU 902 may include at least one processor 9022 and at least one memory 9021.

The CU 902 is mainly configured to: perform baseband processing, control the access network device, and the like. The DU 901 and the CU 902 may be physically disposed together, or may be physically separated, that is, the base station may be a distributed base station. The CU 902 is a control center of the access network device, may also be referred to as a processing unit, and is mainly configured to complete a baseband processing function. For example, the CU 902 may be configured to control the access network device to perform operation procedures related to the access network device in the foregoing method embodiments.

In addition, optionally, the access network device 90 may include one or more radio frequency units, one or more DUs, and one or more CUs. The DU may include at least one processor 9013 and at least one memory 9014, the radio frequency unit may include at least one antenna 9011 and at least one radio frequency unit 9012, and the CU may include at least one processor 9022 and at least one memory 9021.

In an example, the CU 902 may include one or more boards. A plurality of boards may jointly support a radio access network (for example, a 5G network) with a single access indication, or may separately support radio access networks (for example, an LTE network, a 5G network, or another network) with different access standards. The memory 9021 and the processor 9022 may serve one or more boards. That is, a memory and a processor may be disposed on each board. Alternatively, a plurality of boards may share a same memory and a same processor. In addition, a necessary circuit may further be disposed on each board. The DU 901 may include one or more boards. A plurality of boards may jointly support a radio access network (for example, a 5G network) with a single access indication, or may separately support radio access networks (for example, an LTE network, a 5G network, or another network) with different access standards. The memory 9014 and the processor 9013 may serve one or more boards. That is, a memory and a processor may be disposed on each board. Alternatively, a plurality of boards may share a same memory and a same processor. In addition, a necessary circuit may further be disposed on each board.

The access network device shown in FIG. 9 can implement all processes related to the access network device in the foregoing method embodiments. Operations and/or functions of the modules in the access network device shown in FIG. 9 are respectively used to implement corresponding procedures in the foregoing method embodiments. For details, refer to the descriptions in the foregoing method embodiments. To avoid repetition, detailed descriptions are properly omitted herein.

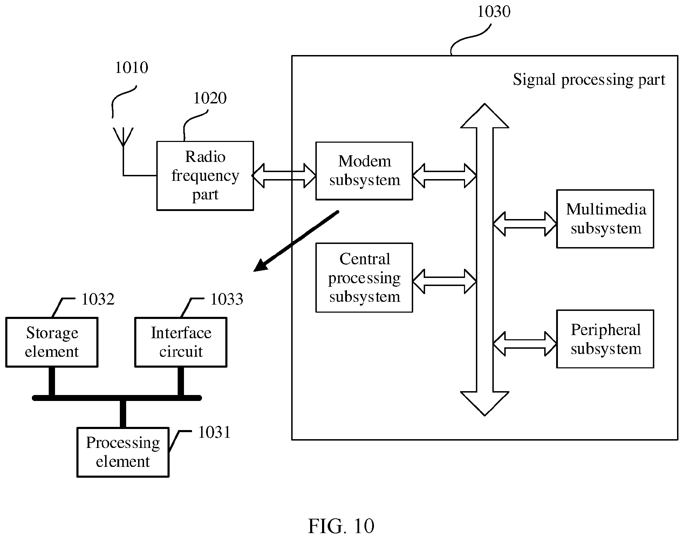

FIG. 10 is a diagram of a structure of a terminal device according to an embodiment of this application. The terminal device may be applied to the communication system shown in FIG. 1, and is configured to implement operations of the terminal device in the foregoing embodiments. As shown in FIG. 10, the terminal device includes: an antenna 1010, a radio frequency part 1020, and a signal processing part 1030. The antenna 1010 is connected to the radio frequency part 1020. In a downlink direction, the radio frequency part 1020 receives, through the antenna 1010, information sent by a network device; and sends, to the signal processing part 1030 for processing, the information sent by the network device. In an uplink direction, the signal processing part 1030 processes the information of the terminal device, and sends the processed information to the radio frequency part 1020; and the radio frequency part 1020 processes the information of the terminal device, and then sends the processed information to the network device through the antenna 1010.

The signal processing part 1030 may include a modem subsystem, configured to process data at each communication protocol layer. The signal processing part 1030 may further include a central processing subsystem, configured to process an operating system and an application layer that are of the terminal device. In addition, the signal processing part 1030 may further include another subsystem, for example, a multimedia subsystem, or a peripheral subsystem. The multimedia subsystem is configured to control a camera or a screen display of the terminal device. The peripheral subsystem is configured to connect to another device. The modem subsystem may be a separately disposed chip.

The modem subsystem may include one or more processing elements 1031, for example, include a main control CPU and another integrated circuit. In addition, the modem subsystem may further include a storage element 1032 and an interface circuit 1033. The storage element 1032 is configured to store data and a program. However, a program used to perform the methods performed by the terminal device in the foregoing methods may not be stored in the storage element 1032, but is stored in a memory outside the modem subsystem, and is loaded and used by the modem subsystem when to be used. The interface circuit 1033 is configured to communicate with another subsystem.

The modem subsystem may be implemented by using a chip. The chip includes at least one processing element and an interface circuit. The processing element is configured to perform the steps of any method performed by the terminal device. The interface circuit is configured to communicate with another apparatus. In an implementation, units of the terminal device that implement the steps in the foregoing methods may be implemented by a program scheduled by a processing element. For example, the apparatus used for the terminal device includes a processing element and a storage element. The processing element invokes a program stored in the storage element, to perform the method performed by the terminal device in the foregoing method embodiment. The storage element may be a storage element whose processing element is located on a same chip, that is, an on-chip storage element.

In another implementation, the program used to perform the method performed by the terminal device in the foregoing method may be in a storage element located on a different chip from the processing element, that is, an off-chip storage element. In this case, the processing element invokes or loads the program from the off-chip storage element to the on-chip storage element, to invoke and perform the method performed by the terminal device in the foregoing method embodiment.

In still another implementation, units of the terminal device that implement the steps in the foregoing method may be configured as one or more processing elements. The processing elements are disposed in the modem subsystem. The processing element herein may be an integrated circuit, for example, one or more ASICs, one or more DSPs, one or more FPGAs, or a combination of the types of integrated circuits. These integrated circuits may be integrated together to form a chip.

Units of the terminal device that implement the steps in the foregoing method may be integrated together, and implemented in a form of SOC. The SOC chip is configured to implement the foregoing method. At least one processing element and a storage element may be integrated into the chip, and the processing element invokes a program stored in the storage element to implement the foregoing method performed by the terminal device. Alternatively, at least one integrated circuit may be integrated into the chip, to implement the foregoing method performed by the terminal device. Alternatively, with reference to the foregoing implementations, functions of some units may be implemented by a program invoked by the processing element, and functions of some units are implemented by the integrated circuit.

It can be learned that the foregoing apparatus used for the terminal device may include at least one processing element and an interface circuit. The at least one processing element is configured to perform any one of the methods that are performed by the terminal device and that are provided in the foregoing method embodiments. The processing element may perform some or all steps performed by the terminal device, in a first manner, to be specific, by invoking the program stored in the storage element; or may perform some or all steps performed by the terminal device, in a second manner, to be specific, by using a hardware integrated logical circuit in the processor element in combination with instructions; or may certainly perform, by combining the first manner and the second manner, some or all steps performed by the terminal device.

The processing element herein is the same as that described above, and may be implemented by using a processor. A function of the processing element may be the same as a function of the processing unit described in FIG. 8. For example, the processing element may be a general-purpose processor, for example, a CPU, or may be one or more integrated circuits configured to implement the foregoing method, for example, one or more ASICs, one or more microprocessors DSPs, or one or more FPGAs, or a combination of at least two of the integrated circuit forms. The storage element may be implemented by using a memory. A function of the storage element may be the same as a function of the storage unit described in FIG. 8. The storage element may be a memory, or may be a general name of a plurality of memories.

The terminal device shown in FIG. 10 can implement all processes related to the terminal device in the foregoing method embodiments. Operations and/or functions of the modules in the terminal device shown in FIG. 10 are intended to implement the corresponding procedures in the foregoing method embodiments. For details, refer to the descriptions in the foregoing method embodiments. To avoid repetition, detailed descriptions are properly omitted herein.

The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, wherein the method comprises:
receiving, in a first cell, configuration information of at least one candidate cell from an access network device;
selecting a second cell when a radio link of the first cell meets a first condition; and
if the second cell belongs to the at least one candidate cell, performing a handover from the first cell to the second cell, and communicating with the access network device in the second cell based on configuration information of the second cell; or if the second cell does not belong to the at least one candidate cell, performing radio resource control RRC reestablishment to access the second cell.

2. The method according to claim 1, wherein that radio link quality of the first cell meets the first condition comprises at least one of the following:
the radio link quality of the first cell is less than a first threshold;
the radio link quality of the first cell is always less than the first threshold in a first time window;
a quantity of out-of-synchronization indications consecutively detected by a terminal device is greater than or equal to a second threshold;
after the quantity of out-of-synchronization indications consecutively detected by the terminal device is greater than or equal to the second threshold, the terminal device starts a timer, and detects no in-synchronization indication in a timing window of the timer; or
a radio link failure RLF occurs in the first cell.

3. The method according to claim 2, wherein the method further comprises:
receiving, in the first cell, first information from the access network device, wherein the first information is used to configure the first condition.

4. The method according to any one of claims 1 to 3, wherein radio link quality of the second cell meets a second condition; and
that radio link quality of the second cell meets a second condition comprises at least one of the following:
the radio link quality of the second cell is greater than or equal to a third threshold;
the radio link quality of the second cell is always greater than or equal to the third threshold in a second time window;
the radio link quality of the second cell is greater than or equal to radio link quality of a candidate cell other than the second cell in the at least one candidate cell;
the radio link quality of the second cell is always greater than or equal to the radio link quality of the candidate cell other than the second cell in the at least one candidate cell in the second time window;
the radio link quality of the second cell is greater than the radio link quality of the first cell;
the radio link quality of the second cell is always greater than the radio link quality of the first cell in the second time window;
the radio link quality of the second cell is greater than a sum of the radio link quality of the first cell and an offset; and
the radio link quality of the second cell is always greater than the sum of the radio link quality of the first cell and the offset in the second time window.

5. The method according to claim 4, wherein the method further comprises:
receiving, in the first cell, second information from the access network device, wherein the second information is used to configure the second condition.

6. The method according to any one of claims 1 to 5, wherein the method further comprises:
sending third information to the access network device in the second cell, wherein the third information indicates that the terminal device has been handed over from the first cell to the second cell, and the handover is a cell handover triggered by the terminal device.

7. The method according to claim 6, wherein the third information comprises at least one of the following:
an identifier of the terminal device;
an identifier of the first cell;
downlink beam information used by the access network device to send downlink data to the terminal device in the second cell; and
indication information, wherein the indication information indicates the cell handover triggered by the terminal device.

8. The method according to claim 6 or 7, wherein the third information is carried in a message in a random access procedure initiated by the terminal device in the second cell.

9. The method according to any one of claims 1 to 5, wherein the method further comprises:
sending fourth information to the access network device in the second cell, wherein the fourth information is carried on a first resource, and the first resource is a resource corresponding to a cell handover triggered by the terminal device.

10. The method according to any one of claims 1 to 9, wherein the method further comprises:
receiving, in the first cell, enabling information from the access network device, wherein the enabling information is used to enable the terminal device to trigger the cell handover after a problem occurs on a radio link of a serving cell of the terminal device.

11. The method according to any one of claims 1 to 10, wherein the at least one candidate cell comprises: a candidate cell corresponding to a layer 1/layer 2 handover, and/or a candidate cell corresponding to a layer 3 handover.

12. A communication apparatus, comprising a module configured to perform the method according to any one of claims 1 to 11.

13. A communication apparatus, comprising a processor, wherein the processor is coupled to a memory, the memory stores a computer program, and the processor is configured to invoke the computer program in the memory, to enable the communication apparatus to perform the method according to any one of claims 1 to 11.

14. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 11 through a logic circuit or by executing code instructions.

15. A computer-readable storage medium, wherein the storage medium stores a computer program or instructions, and when the computer program or instructions are executed by a computer, the method according to any one of claims 1 to 11 is implemented.

16. A computer program product, wherein when a computer reads and executes the computer program product, the computer is enabled to perform the method according to any one of claims 1 to 11.
